# EUROPEAN PATENT APPLICATION

(11) **EP 2 341 438 A1**
(43) Date of publication of application: **06.07.2011**
(21) Application number: 10197428.5
(22) Date of filing: 30.12.2010
(51) Int. Cl.: G06F 11/36

(54) **Coverage apparatus and method for testing multi-thread environment**

(30) Priority: 04.01.2010 KR 20100000237
(71) Applicant: Samsung Electronics Co., Ltd., Gyeonggi-do 442-742 (KR)
(72) Inventor: Kim, Hyo-Young, Gyeonggi-do (KR); Park, Jung-Gyu, Gyeonggi-do (KR); Moon, Sung-do, Gyeonggi-do (KR)
(74) Representative: Land, Addick Adrianus Gosling

(57) **Abstract**

A coverage apparatus and method for testing a multi-thread environment is provided. The coverage apparatus and method analyzes an application to search for synchronization blocks, forcedly schedules an execution order of a plurality of threads including the detected synchronization blocks in such a manner as to induce execution conflicts of the synchronization blocks, and then executes the threads in the scheduled order to perform coverage of the corresponding application.

## Description

This application claims the benefit under 35 U.S.C. §119(a) of Korean Patent Application No. 10-2010-0000237, filed on January 4, 2010 in the Korean Intellectual Property Office, the entire disclosure of which is incorporated herein by reference for all purposes.

The following description relates to coverage, and more particularly, to a technique for testing applications in a multi-thread environment.

Due to mistakes in a program design or unexpected variables, a program may be run differently from a programmer's intention, and/or inefficiently. Parts of a program that create undesired results are sometimes called bugs or program errors. In order to avoid such bugs or program errors, testing is essential during program development.

Program testing is necessary, particularly, in software development. However, conventional test methods have failed to provide definite criteria about when a test has to be complete. Also, the conventional test methods could not ensure that all parts of a program have been executed, and also testing all inputs was impossible.

In order to overcome such problems, a concept of "coverage" has been introduced. Coverage includes all methods for determining whether to-be-tested parts in a program have all been tested. In general, coverage is carried out in such a manner as to define tasks to be measured and to perform a test on the tasks until all the tasks are measured.

Coverage may be classified into several types according to tasks to be measured. For example, function coverage measures whether all functions have been executed. Statement coverage measures whether all statements of a program have been executed.

Decision coverage measures whether a True/False condition has been executed at every branch node. Entry/Exit coverage measures whether all functions have been called and all return points in each function have been called. Other than the above-described examples, there are various coverage models.

For example, in statement coverage, which is the most common coverage model, statements are tasks, and it is checked whether all source code statements of a program have been executed. When all source code statements are executed, it is determined that 100% coverage is achieved.

Through such coverage, problems that could not be found by existing test methods can be detected. Coverage becomes important criteria for measuring processing stages of a test during program development by allowing measurement on whether a test has been performed well and indicating how long a test has to be performed.

However, the above-described coverage models are not suitable to test applications in a multi-thread environment in which a plurality of threads are simultaneously generated.

The following description relates to a coverage technique capable of efficiently testing applications in a multi-thread environment.

In one general aspect, there is provided a coverage apparatus to test a multi-thread environment, Including a synchronization block searching unit configured to analyze an application to search for a plurality of synchronization blocks, a scheduler configured to forcedly schedule an execution order of a plurality of threads including the detected synchronization blocks in such a manner as to induce execution conflicts of the synchronization blocks, a coverage performing unit configured to execute the plurality of threads in an order scheduled by the scheduler to perform coverage of the corresponding application, and to create a result of the coverage performance, and a controller configured to analyze the result of the coverage performance to determine whether to continue or terminate coverage of the application.

The coverage performing unit may insert, in response to executing the plurality of threads, a first test part and a second test part, respectively, before and in a synchronization block included in a current thread, in order to determine whether to continue to execute or delay the synchronization block included in the current thread.

The first test part may be inserted before the synchronization block included in the current thread to determine whether a first state in which the synchronization block included in the current thread waits without being executed since the current thread is executed later than another thread has been accomplished, and may await, in response to the first state not yet being accomplished, accomplishment of the first state until another thread in which the corresponding synchronization block is included appears.

In response to the first state being accomplished, the first test part may determine whether there is another thread awaiting accomplishment of a second state in which the synchronization block included in the current block blocks another synchronization block included in the other block from being executed since the current thread is executed earlier than the other thread, and may release, in response to there being another thread awaiting accomplishment of the second state, the waiting status of the thread awaiting the accomplishment of the second state.

The second test part may be inserted in a synchronization block included in a thread, may determine whether there is another thread awaiting accomplishment of the first state, and may wait, in response to there being no thread awaiting accomplishment of the first state, until the current thread accomplishes the second state.

The second test part may release, in response to there being another thread awaiting accomplishment of the first state, the waiting status of the thread awaiting accomplishment of the first state.

In response to 100% coverage being achieved, the controller may decide to terminate coverage.

In response to no change occurring in the result of the coverage performance after coverage is performed a predetermined number of times, the controller may decide to terminate coverage.

In another aspect, there may be provided a coverage method of testing a multi-thread environment, which is performed by a coverage apparatus, the coverage method including analyzing an application to search for a plurality of synchronization blocks, forcedly scheduling an execution order of a plurality of threads including the detected synchronization blocks in such a manner as to induce execution conflicts of the synchronization blocks, executing the plurality of threads in an order scheduled by the scheduler to perform coverage of the corresponding application, and to create a result of the coverage performance, analyzing the result of the coverage performance, and determining whether to continue or terminate coverage of the application according to the result of the analysis.

The executing of the plurality of threads may include determining whether a current thread has accomplished a first state in which a synchronization block included in the current thread waits without being executed since the current thread is executed later than another thread, and waiting, in response to the first state not yet being accomplished, until another thread in which the corresponding synchronization block is included appears.

The executing of the plurality of threads may include determining, in response to the first state having been accomplished, whether there is another thread awaiting accomplishment of a second state in which a synchronization block included in a current thread blocks another synchronization block included in the other thread from being executed since the current thread is executed earlier than the other thread, and releases, in response to there being another thread awaiting accomplishment of the second state, the waiting status of the thread awaiting accomplishment of the second state.

The executing of the plurality of threads may include determining whether there is another thread awaiting accomplishment of a first state, and in response to there being no thread awaiting accomplishment of the first state, waiting until the current thread accomplishes a second state.

The executing of the plurality of threads may include releasing, in response to there being another thread awaiting accomplishment of the first state, the waiting status of the thread awaiting accomplishment of the first state.

The determining of whether to continue or terminate coverage of the application may include deciding to terminate coverage in response to 100% coverage being achieved.

The determining of whether to continue or terminate coverage of the application may include deciding to terminate coverage in response to no change occurring in the result of the coverage performance after coverage is performed a predetermined number of times.

In another aspect, there may be provided a coverage method of testing a multi-thread environment, the method including scheduling a plurality of threads including synchronization blocks so that execution conflicts are produced between the synchronization blocks, and executing the plurality of threads according to the scheduling to determine a coverage result.

The method may further include determining whether to continue or terminate coverage according to the coverage result.

The method may further include determining whether a synchronization block in a current thread waits without being executed due to another thread not having yet been executed.

The method may further include releasing the waiting state of the current thread in response to the execution of the other thread.

The method may further include determining whether to continue or terminate coverage according to whether 100% coverage has been achieved or no change occurring in the coverage after a predetermined number of thread executions.

Accordingly, it is possible to efficiently test applications in a multi-thread environment.

Other features and aspects will be apparent from the following detailed description, the drawings, and the claims.

### BRIEF DESCRIPTION OF THE DRAWINGS

FIG. 1 is a diagram illustrating an example of a coverage apparatus for testing a multi-thread environment.
FIG. 2 is a view illustrating an example of application source codes.
FIG. 3 is a flowchart illustrating an example of operation of a first test part.
FIG. 4 is a flowchart illustrating an example of operation of a second test part.
FIG. 5 illustrates a state in which the first test part and the second test part are inserted into the application source codes illustrated in FIG. 2.
FIG. 6 is a flowchart illustrating an example of a coverage method that is performed by the coverage apparatus.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

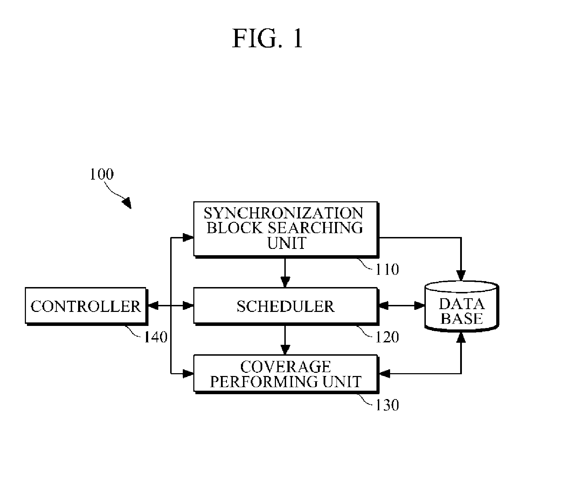

FIG. 1 is a diagram illustrating an example of a coverage apparatus 100 for testing a multi-thread environment. As illustrated in FIG. 1, the coverage apparatus 100 may include a synchronization block searching unit 110, a scheduler 120, a coverage performing unit 130, and a controller 140.

The synchronization block searching unit 110 may analyze an application that tries to perform coverage to search for synchronization blocks from the application. An application in a multi-thread environment may include synchronization blocks that are synchronized to a plurality of threads. The coverage apparatus 100 may cause the synchronization block searching unit 110 to analyze an application that tries to perform coverage to detect the number of synchronization blocks existing in the application, and may store the number of the detected synchronization blocks.

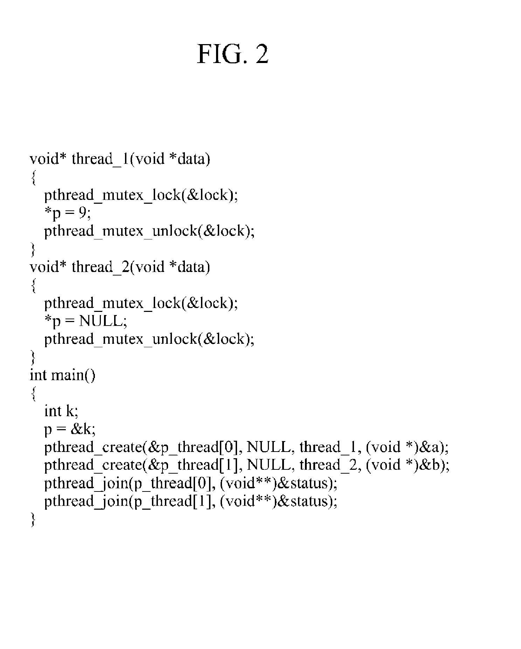

FIG. 2 is a view illustrating an example of application source codes, wherein a main function calls two thread functions "thread_1" and "thread_2". In FIG. 2, a portion of the code in which "pthread_mutex_lock" and "pthread_mutex_unlock" are stacked in each of "thread_1" and "thread_2" is a synchronization block that is synchronized to a plurality of threads, and the two threads use the same variables "lock" and the variables "lock" are not used simultaneously, that is, mutually exclusively executed.

Referring to FIG. 1, the scheduler 120 may forcedly schedule an execution order of a plurality of threads including synchronization blocks detected by the synchronization block searching unit 110 in such a manner as to induce execution conflicts of the synchronization blocks.

Referring to FIG. 2, in a general case, "thread_1" is first executed and "thread_2" is executed later. In such a case, for example, when the application is tested using statement coverage, 100% coverage may be accomplished.

However, if "thread_2" is first executed and "thread_1" is executed later, a small timing difference may be generated. In such a case, existing coverage such as statement coverage has difficulties in detecting such a small timing difference.

In order to overcome the problem, the coverage apparatus 100 may induce conflicts by causing the scheduler 120 to schedule executions of synchronization blocks in such a manner that one or more synchronization blocks are successively executed in different orders, thereby maximizing coverage.

The coverage performing unit 130 may execute the threads in the order scheduled by the scheduler 120 to perform coverage of the corresponding application and create the result of the coverage performance.

For example, a state in which a current thread is executed later than another thread so that a synchronization block included in the current thread waits without being executed may be defined as a first state, and a state in which a current thread is executed earlier than another thread so that a synchronization block included in the current thread blocks another synchronization block included in the other thread from being executed may be defined as a second state.

Referring to FIG. 2, in an example in which "thread_1" fails to accomplish the second state in which the "thread_1" is executed earlier than "thread_2" so that the synchronization block included in the "thread_1" blocks the synchronization block included in the "thread_2" from being executed, the coverage apparatus 100 may cause the scheduler 120 to forcedly schedule the "thread_1" and "thread_2" such that a conflict occurs between the "thread_1" and "thread_2" by executing the "thread_2" as soon as executing the "thread_1", and may then cause the coverage performing unit 130 to execute the "thread_2" as soon as executing the "thread_1" in the order scheduled by the scheduler 120, thereby performing coverage of the corresponding application.

Meanwhile, in an example in which the "thread_1" fails to accomplish the first state in which the "thread_1" is executed later than the "thread_2" such that the synchronization block included in the "thread_1" waits without being executed, the coverage apparatus 100 may perform scheduling through the scheduler 120 in such a manner so as to delay accomplishment of the first state until another thread including the synchronization block included in the "thread_1" appears, and may then cause the coverage performing unit 130 to execute the "thread_1" in response to another thread including the synchronization block appearing, thereby performing coverage of the corresponding application.

In other words, the coverage apparatus 100 may cause the scheduler 120 to forcedly schedule a plurality of threads in order to accomplish both the first and second states, may cause the coverage performing unit 130 to change the execution order of the threads according to the order scheduled by the scheduler 120 and execute the threads in the execution order in order to induce conflicts between the threads, and check to ensure that no conflict occurs in response to the execution order of the threads changing, thereby completing coverage.

The controller 140 may analyze the result of the coverage performance to determine whether to continue or terminate coverage of the corresponding application. The controller 140 may decide to terminate coverage in response to 100% coverage being achieved. Meanwhile, the controller 140 may decide to terminate coverage in response to no change being indicated in the result of the coverage performance after coverage is performed a predetermined number of times.

Accordingly, the coverage apparatus 100 may analyze an application on which coverage will be performed to search for synchronization blocks from the application, may forcedly schedule an execution order of a plurality of threads including the found synchronization blocks in order to induce conflicts between the synchronization blocks, and may then execute the threads in the scheduled order to perform coverage of the corresponding application, thereby efficiently testing the application in a multi-thread environment.

According to an example, in response to executing a thread, the coverage performing unit 130 of the coverage apparatus 100 may add a first test part 131 and a second test part 132, respectively, before and in a synchronization block included in the corresponding thread, thereby determining whether to execute or delay a synchronization block included in each synchronization block. For example, the first and second test parts 131 and 132 may be configured in the form of functions.

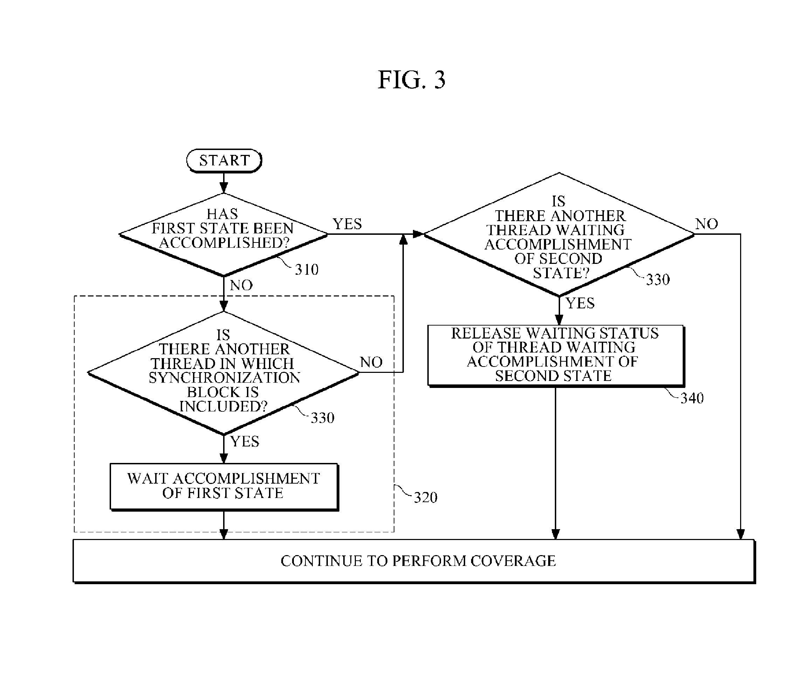

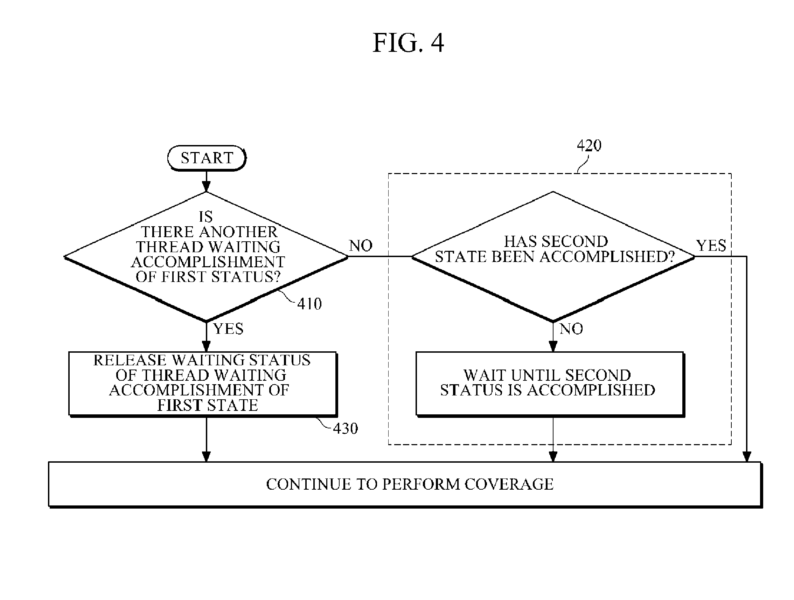

FIG. 3 is a flowchart illustrating an example of operation of the first test part 131, and FIG. 4 is a flowchart illustrating an example of operation of the second test part 132. The operation of the first and second test parts 131 and 132 will be described with reference to FIGS. 3 and 4, below.

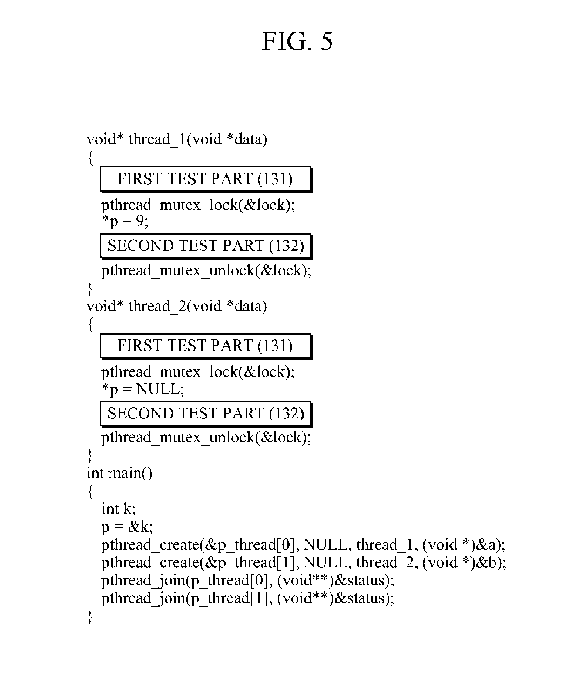

Referring to FIGS. 3 and 5, the first test part 131 may be added before a synchronization block included in a current thread and may determine whether the first state in which the current thread is executed later than another thread so that a synchronization block included in the current thread waits without being executed is accomplished (310). If the first state is not accomplished, the process may await accomplishment of the first state until another thread in which the corresponding synchronization block is included appears (320).

Meanwhile, if the first state is accomplished, the first test part 131 may determine whether there is another thread that awaits accomplishment of the second state in which a current thread is executed earlier than another thread so that a synchronization block included in the current thread blocks another synchronization block included in the other thread from being executed (330), and may release, in response to there being another thread that awaits accomplishment of the second state, the waiting status of the thread that awaits accomplishment of the second state (340).

Referring to FIGS. 4 and 5, the second test part 132 may be inserted in the synchronization block included in the thread, may determine whether there is another thread that awaits accomplishment of the first state (410), and may wait, in response to there being no thread that awaits accomplishment of the first state, until the thread accomplishes the second state (420).

Meanwhile, in response to there being another thread that awaits accomplishment of the first state, the second test part 132 may release the waiting status of the thread that awaits accomplishment of the first state (430). Accordingly, in response to executing a thread, the coverage performing unit 130 may perform coverage on a synchronization block included in the thread by using the first and second test parts 131 and 132 added respectively before and in the synchronization block.

FIG. 5 illustrates a state in which the first and second test parts 131 and 132 are inserted into the application source codes illustrated in FIG. 2. Referring to FIG. 5, the first test part 131 may be added before a synchronization block included in each of "thread_1" and "thread_2", that is, before "pthread_mutex_lock", and the second test part 132 may be inserted in the synchronization block included in each of "thread_1" and "thread_2", that is, after the "pthread_mutex_lock".

The coverage apparatus 100 may cause the synchronization block searching unit 110 to analyze the application on which coverage will be performed to search for synchronization blocks from the application, may cause the scheduler 120 to forcedly schedule an execution order of threads in such a manner as to induce execution conflicts of the synchronization blocks, and may cause the coverage performing unit 130 to execute the threads in the scheduled order, thereby performing coverage of the corresponding application.

By forcedly scheduling the execution order of threads in such a manner as to induce execution conflicts of synchronization blocks, "thread_1" may be first created and executed and then "thread_2" may be created and executed. If the "thread_2" is executed after the "thread_1" is terminated, 0% coverage is accomplished.

Meanwhile, if the "thread_2" is executed just after the "thread_1" is executed, the "thread_1" may accomplish the second state and the "thread_2" may accomplish the first state, thereby accomplishing a total 50% of coverage. In order to accomplish 100% coverage, the process of executing the "thread_1" just after executing the "thread_2" may be performed.

If 100% coverage is not accomplished, the controller 140 may analyze the result of the coverage performance created by the coverage performing unit 130 to determine whether to continue or terminate coverage of the corresponding application, and thereby may continue to perform coverage.

Referring again to FIG. 3, in the case in which the "thread_1" is first executed and then the "thread_2" is executed, in response to the "thread_1" being executed, the first test part 131 inserted before the synchronization block included in the "thread_1" may determine whether the "thread_1" has accomplished the first state (310). In this case, since the "thread_1" has accomplished the second state and has not yet accomplished the first state, the process may await accomplishment of the first state until another thread in which the corresponding synchronization block is included appears (320).

Then, in response to the "thread_2" being executed, the "thread_1" may accomplish the first state, processing by the second test part 132 inserted in the synchronization block included in the "thread_1" may be performed, and the first test part 131 inserted before the synchronization block included in the "thread_2" may determine whether the "thread_2" has accomplished the first state (310).

Meanwhile, since the "thread_2" has already accomplished the first state, it may be determined whether there is another thread awaiting accomplishment of the second state (330). In response to there being another thread awaiting accomplishment of the second state, the waiting status of the thread awaiting accomplishment of the second state may be released (340). In response to there being no thread awaiting accomplishment of the second state, processing by the second test part 132 inserted in the synchronization block included in the "thread_2" may be performed.

Referring to FIG. 4, the second test part 132 inserted in the synchronization block included in the "thread_1" may determine whether there is another thread awaiting accomplishment of the first state (410). Since the "thread_2" may await accomplishment of the first state, the waiting status of the "thread_2" awaiting accomplishment of the first state may be released (430).

Accordingly, the second test part 132 inserted in the synchronization block included in the "thread_2" may determine whether there is another thread awaiting accomplishment of the first state (410), and since there is no thread awaiting accomplishment of the first state, the second test part 132 may process the "thread_2" to accomplish the second state (420). As a result, the "thread_1" and "thread_2" accomplish both the first state and the second state.

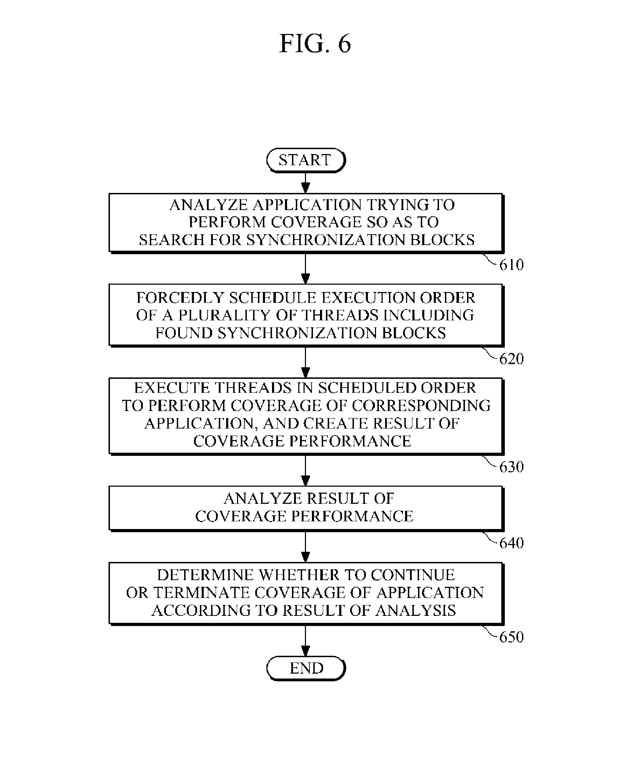

Hereinafter, a coverage method of testing the multi-thread environment which is performed by a coverage apparatus will be described with reference to FIG. 6. FIG. 6 is a flowchart illustrating an example of a coverage method that is performed by the coverage apparatus.

In operation 610, the coverage apparatus may analyze an application that tries to perform coverage to search for synchronization blocks. Since a method of searching for synchronization blocks from an application has been described above, details thereof will be omitted.

In operation 620, the coverage apparatus may forcedly schedule a plurality of threads including the found synchronization blocks in such a manner so as to induce execution conflicts of the synchronization blocks.

In more detail, in operation 620, the coverage apparatus may schedule executions of synchronization blocks to efficiently perform coverage on an application in a multi-thread environment such that one or more synchronization blocks are successively executed in different orders, thereby forcedly inducing conflicts to maximize coverage.

In operation 630, the coverage apparatus may execute the plurality of threads in the order scheduled in operation 620 to perform coverage of the corresponding application, and may create the result of the coverage performance.

The coverage apparatus may determine whether a current thread has accomplished the first state in which a synchronization block included in the current thread waits without being executed since the current thread is executed later than another thread, and awaits, in response to the first state not being accomplished, accomplishment of the first state until another thread in which the corresponding synchronization block is included appears.

Meanwhile, in response to the first state being accomplished, the coverage apparatus may determine whether there is another thread awaiting accomplishment of the second state in which the synchronization block included in the current thread blocks another synchronization block included in the other thread from being executed since the current thread is executed earlier than the other thread, and may release, in response to there being another thread awaiting accomplishment of the second state, the waiting status of the thread awaiting accomplishment of the second state.

Meanwhile, the coverage apparatus may determine whether there is another thread awaiting accomplishment of the first state, and may wait, in response to there being no thread awaiting accomplishment of the first state, until the current thread accomplishes the second state.

In response to there being another thread awaiting accomplishment of the first state, the coverage apparatus may release the waiting status of the thread awaiting accomplishment of the first state.

Details of the method in which the coverage apparatus executes a plurality of threads in a scheduled order to perform coverage of the corresponding application have been described above, and a further description therefore will be omitted.

In operation 640, the coverage apparatus may analyze the result of the coverage performance and may determine whether to continue or terminate coverage of the corresponding application according to the result of the analysis.

In operation 650, in response to the coverage apparatus determining that 100% coverage is achieved according to the result of the coverage performance, the coverage apparatus may terminate coverage. Otherwise, the coverage apparatus may continue coverage as previously discussed.

As such, since the coverage apparatus and method of testing the multi-thread environment may analyze an application that tries to perform coverage to search for synchronization blocks from the application, may forcedly schedule an execution order of a plurality of threads including the found synchronization blocks in such a manner as to induce execution conflicts of the synchronization blocks, and may execute the threads in the scheduled order, thereby performing coverage of the corresponding application, it is possible to efficiently test the application in the multi-thread environment.

The processes, functions, methods and/or software described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. A coverage apparatus to test a multi-thread environment, comprising:
a synchronization block searching unit configured to analyze an application to search for a plurality of synchronization blocks;
a scheduler configured to forcedly schedule an execution order of a plurality of threads including the detected synchronization blocks in such a manner as to induce execution conflicts of the synchronization blocks;
a coverage performing unit configured to execute the plurality of threads in an order scheduled by the scheduler to perform coverage of the corresponding application, and to create a result of the coverage performance; and
a controller configured to analyze the result of the coverage performance to determine whether to continue or terminate coverage of the application.

2. The coverage apparatus of claim 1, wherein the coverage performing unit inserts, in response to executing the plurality of threads, a first test part and a second test part, respectively, before and in a synchronization block included in a current thread, in order to determine whether to continue to execute or delay the synchronization block included in the current thread.

3. A coverage method of testing a multi-thread environment, which is performed by a coverage apparatus, the coverage method comprising:
analyzing an application to search for a plurality of synchronization blocks;
forcedly scheduling an execution order of a plurality of threads including the detected synchronization blocks in such a manner as to induce execution conflicts of the synchronization blocks;
executing the plurality of threads in an order scheduled by the scheduler to perform coverage of the corresponding application, and to create a result of the coverage performance;
analyzing the result of the coverage performance; and
determining whether to continue or terminate coverage of the application according to the result of the analysis.

4. The coverage method according to claim 3, wherein the apparatus according to claim 1 or 2 is met.

5. The coverage method of claim 3 or 4, wherein the executing of the plurality of threads comprises determining whether a current thread has accomplished a first state in which a synchronization block included in the current thread waits without being executed since the current thread is executed later than another thread, and waiting, in response to the first state not yet being accomplished, until another thread in which the corresponding synchronization block is included appears.

6. The coverage method of claim 3, 4 or 5, wherein the executing of the plurality of threads comprises determining, in response to the first state having been accomplished, whether there is another thread awaiting accomplishment of a second state in which a synchronization block included in a current thread blocks another synchronization block included in the other thread from being executed since the current thread is executed earlier than the other thread, and releases, in response to there being another thread awaiting accomplishment of the second state, the waiting status of the thread awaiting accomplishment of the second state.

7. The coverage method of any of claims 3-6 wherein the executing of the plurality of threads comprises determining whether there is another thread awaiting accomplishment of a first state, and in response to there being no thread awaiting accomplishment of the first state, waiting until the current thread accomplishes a second state.

8. The coverage method of any of claims 3-7 wherein the executing of the plurality of threads comprises releasing, in response to there being another thread awaiting accomplishment of the first state, the waiting status of the thread awaiting accomplishment of the first state.

9. The coverage method of any of claims9 3-8 wherein the determining of whether to continue or terminate coverage of the application comprises deciding to terminate coverage in response to 100% coverage being achieved.

10. The coverage method of any of claims 3-9, wherein the determining of whether to continue or terminate coverage of the application comprises deciding to terminate coverage in response to no change occurring in the result of the coverage performance after coverage is performed a predetermined number of times.

11. A coverage method of testing a multi-thread environment, the method comprising:
scheduling a plurality of threads including synchronization blocks so that execution conflicts are produced between the synchronization blocks; and
executing the plurality of threads according to the scheduling to determine a coverage result.

12. The method of claim 11, further comprising determining whether to continue or terminate coverage according to the coverage result.

13. The method of claim 11 or 12, further comprising determining whether a synchronization block in a current thread waits without being executed due to another thread not having yet been executed.

14. The method of claim 11, 12 ,or 13, further comprising releasing the waiting state of the current thread in response to the execution of the other thread.

15. The method of any of claims 11-14, further comprising determining whether to continue or terminate coverage according to whether 100% coverage has been achieved or no change occurring in the coverage after a predetermined number of thread executions.
